(19) Europäisches Patentamt
European Patent Office
Office européen des brevets

(11) EP 1 258 487 B1

(12) EUROPEAN PATENT SPECIFICATION

(45) Date of publication and mention of the grant of the patent:
**03.08.2005 Bulletin 2005/31**

(51) Int Cl.[7]: **C07F 15/02**, C07F 15/00, C07F 13/00, B01J 31/22, C08F 30/00

(21) Application number: **02010935.1**

(22) Date of filing: **16.05.2002**

(54) **Procedure for the preparation of metal complexes containing hydroxyalkoxycarbonylcyclopentadienide ligands**

Verfahren zur Herstellung von Metall-Komplexen, die Hydroxyalkoxycarbonylcyclopentadien-Liganden enthalten

Procédé de préparation de complexe métallique contenant des ligands cyclopentadienid-hydroxyalkoxycarbonyl

(84) Designated Contracting States:
**AT BE CH CY DE DK ES FI FR GB GR IE IT LI LU MC NL PT SE TR**

(30) Priority: **17.05.2001 IT BO20010308**

(43) Date of publication of application:
**20.11.2002 Bulletin 2002/47**

(73) Proprietor: **UNIVERSITA DEGLI STUDI DI BOLOGNA**
**40126 Bologna (IT)**

(72) Inventors:
- **Busetto, Luigi, Prof**
  **40135 Bologna (IT)**
- **Cassani, Maria, Cristina, Dr**
  **40138 Bologna (IT)**
- **Mazzoni, Rita, Dr**
  **40044 Sasso Marconi(Bologna) (IT)**

(74) Representative: **Negrini, Elena**
**Agazzani & Associati S.r.l.**
**Via dell'Angelo Custode 11/6**
**40141 Bologna (IT)**

(56) References cited:
**WO-A-98/50396** **US-A- 5 717 122**

- **TAEKO IZUMI: "Synthesis and Cation-Complexing Ability of Oxo Crown Ethers Containing a Ferrocene Nucleus" BULL. CHEM. SOC. JPN., vol. 57, 1984, pages 2435-2439, XP001073902**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 258 487 B1

## Description

The present invention relates to a procedure for the production of metal complexes containing hydroxyalkoxycarbonylcyclopentadienide ligands, the new ligands and the intermediate products involved in this synthetic procedure.

Cyclopentadienyl ligands (Cp) have a wide range of applications in organometallic chemistry and catalysis as described in the following reviews: Macomber, D. W.; Hart, W. P.; Rausch, M. D. *Adv. Organom. Chem.* **1982,** *21*, 1. Janiak, C.; Schumann, H. *Adv. Organomet. Chem.* **1991,** *33,* 291. Coville, N. J.; du Plooy, K. E.; Pickl, W. *Coord. Chem. Rev.* **1992,** *116*, 1. Haltermann, R. L. *Chem. Rev.* **1992,** *92,* 965. Hays, M. L.; Hanusa, T. P. *Adv. Organomet. Chem.* **1996,** *40,* 117. T. Cuenca, P. Royo, *Coord. Chem. Rev.* **1999,** *193-195,* 447-498.

Replacements of one or more of the cyclopentadienyl ring hydrogens with different functional groups can change both electronic properties and range of applications of the related metal complexes. This is especially true for Cp with attached carbonyl COX (X = OR, NHR) functionalities because they may offer different coordination modes, *i.e.* $\kappa^2$*O,O*'-chelation of the carbonyl oxygen atoms or $\eta^5$-coordination of the ring carbons, depending on the nature of the metal center (see for example: Bruce, M. I.; White, A. H. *Aust. J. Chem.,* **1990,** *43,* 949. Oberhoff, M.; Duda, L.; Karl, J.; Mohr, R.; Frölich, R.; Grehl, M.; Erker, G. *Organometallics* **1996,** *15*, 4005. Klaβ, K.; Duda, L.; Kleigrewe, N.; Erker, G.; Frölich, R.; Wegelius E. Eur. *J. Inorg. Chem.* **1999,** 11. Albano, V. G.; Busetto, L.; Cassani, M. C.; Sabatino, P. *Organometallics* **2001,** *20*, 282).

Since its discovery in 1951 the organometallic complex bis($\eta^5$-cyclopentadienyl)iron (ferrocene) has been the subject of an enormous scientific research. The very extensive chemistry associated with ferrocene has been due in large measure to the fact that this remarkable organometallic compound undergoes certain aromatic-type electrophilic substitution reaction resulting in products which often possess unique chemical and physical properties. In spite of considerable additional research efforts along these lines, however, only a very few other $\eta^5$-cyclopentadienyl metal compounds have ever been found to undergo analogous aromatic-type substitutions. Thus, a more general route to a wide variety of functionally substituted cyclopentadienyl metal complexes is to first prepare the appropriate ligand and then attach it to a suitable metal substrate.

The chemistry of Cp rings subtituted with an ester group (-C(O)OR) prepared from sodium cyclopentadenide and $NaC_5H_5$ and alkylcarbonate (Equation 1):

$$NaC_5H_5 + (RO)_2CO \rightarrow Na[C_5H_4CO_2R] + ROH \qquad (1)$$

has been thoroughly developed and studied by Rausch and coworkers [(a) Hart, W. P.; Macomber, D. W.; Rausch, M. D. *J. Am. Chem. Soc.* **1980,** 102, 1196. (b) Hart, W. P.; Shihua, D.; Rausch, M. D. *J. Organomet. Chem.* **1985,** *282,* 111. (c) Rausch, M. D.; Lewinson, J. F.; Hart, W. P. *J. Organomet. Chem.* **1988,** *358,* 161. (d) Jones, S. S.; Rausch, M. D.; Bitterwolf, T. E. *J. Organomet. Chem.* **1990,** *396,* 279. (e) Ogasa, M.; Mallin, D. T.; Macomber, D. W.; Rausch, M. D.; Rogers, R. D.; Rollins, A. N. *J. Organomet. Chem.* **1991,** *405,* 41. (f) Jones, S. S.; Rausch, M. D.; Bitterwolf, T. E. *J. Organomet. Chem.* **1993,** *450,* 27].

However the reactivity of $NaC_5H_5$ has been generally limited to dimethyl- or diethylcarbonate and only in one case to ethyl phenylacetate (Bitterwolf, T. E.; Gallagher, S.; Rheingold, A.L.; Yap, G.P.A. *J. Organomet. Chem.* **1997,** *545-546,* 27). One inconvenient met in the reaction described in Eq. 1 is that during the reaction with the sodium salt ($NaC_5H_5$) part of the dialkyl carbonate is always lost as alcohol. WO-A-98/50396 describes metal complexes having general formula A

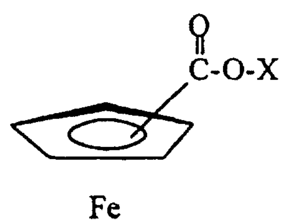

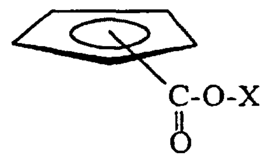

A

in which X represents an oligoethylene glycol radical with 2 to 20 ethoxyl units and/or an α,ω̄-alkyldiol radical with 2 to 18 C atoms, are employed as combustion retardant in solid composite propellants. These compounds have been prepared via the classic multi-step electrophilic substitution synthetic methodology reacting 1,1'-bis(chloroformyl)ferrocene $[Fe\{C_5H_4COCl\}_2]$ with glycols.

There is therefore the need for new, simple and efficient processes for the preparation of type A compounds and more in general of metallic complexes containing hydroxyalkoxycarbonyl-cyclopentadienide ligands.

Aim of the present invention is to set up a synthesis of such ligands via a rapid and economic procedure. We have found that such ligands can be prepared employing cyclic carbonates, reagents that are commercially available at low cost.

Thus one of the aspects of the present invention concerns a procedure for the preparation of metallic complexes having the general formula (I):

$$MZL \qquad (I)$$

wherein

- M is selected from Rh, Mn, Re, Co, Ir, Ru and Pt, in this case there is only one ligand Z or M is Fe, in this case there are two ligands Z and L is absent;
- Z is a substituted cyclopentadienyl ligand of the formula (z):

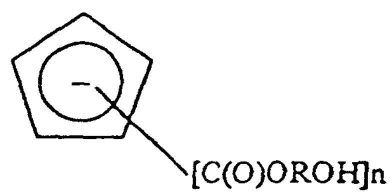

(z)

in which n = 1, 2, 3, 4 or 5 and R is a $(C_2-C_8)$ linear or branched hydrocarbyl radical; L is one or more ligands chosen among oxides, halides, alcholates, ester, ethers, thioether, amines, alkyls, alkenes (linear or cyclic), aryls and phosphines, L can be absent;
this procedure comprises reacting a compound of formula (II)

$$M'(z)_m \qquad (II)$$

wherein

- M' is Na, K, Li or Tl, (z) is defined as described above and m is equal to 1; or
- M' is Mg, (z) is defined as described above and m is equal to 2;

with a compound of formula (III)

$$MXL \qquad (III)$$

where X is present is at least one halide, M and L are defined as described earlier,
and isolate the compound of formula (I) thus obtained.

According to a preferred embodiment of the present invention, M is a metal chosen among Fe, Rh, Mn and Re.

According to an other preferred embodiment of the present invention, Z is one single (z) group and M is chosen among Rh, Mn, Re, Co, Ir, Ru, Pt.

According to another preferred embodiment of the present invention, Z represents two (z) groups, M is Fe and L is absent.

According to another preferred embodiment of the present invention, n is 1.

According to another preferred embodiment of the present invention, M' is sodium.

According to a another preferred embodiment of the present invention, the compound having formula (III) is chosen among $FeCl_2$, $[Rh(CO)_2Cl_2]$, $MnBr(CO)_5$, $ReBr(CO)_5$.

Among the group L the oxides are the convenient ones, in particular carbon oxide.

In the present invention the term "($C_2$-$C_8$) hydrocarbyl" designate a bivalent, linear or branched radical having from 1 to 8 carbon atoms, such as methylene, ethylene, propylene, methylethylene, etc.

The term "halide" designates a chlorine or bromine or iodine or fluorine atom, the chlorine and bromine atoms being the preferred ones. In the compound having formula (I), the ligand L, when present, can be coordinated to the metal in a $\pi$ or $\sigma$ fashion.

The reaction can be carried out at ambient temperature, under an inert atmosphere of nitrogen or argon in aprotic organic solvents such as toluene, xylene, dimethylsulfoxide (DMSO), tetrahydrofuran (THF), dimethoxyethane (DME), ethyl ether, diethylene glycol dimethylether and their mixtures. Among these THF is preferred.

The product having formula (I) can be isolated with conventional procedures, for instance filtration and if necessary, can be purified by chromatography.

The products having formula (I) wherein M is Rh, Mn and Re, are new compounds and become a further subject of the present invention.

These compounds especially those having formula (I) in which M is Rh thanks to the hydroxy functionality on the ring side chain can be grafted on inorganic or organic polymers having suitable functional groups and can be used as heterogenized catalysts.

Compounds having formula (II) are new compounds and become a further subject of the present invention.

Compounds having formula (II) can be prepared from the reaction between a compound of formula (IV)

$$M'(Cp)_m \qquad (IV)$$

in which Cp is the cyclopentadienyl ($C_5H_5$) moiety, M' and m are defined as described above, with a cyclic carbonate $R(O)_2C{=}O$, in which R represents a ($C_2$-$C_8$) linear or branched hydrocarbyl radical.

The condensation reaction among the compound having formula (IV) and the cyclic carbonate are conveniently carried out under an inert atmosphere of nitrogen or argon in a 1:1 molar ratio. The reaction can be carried out at ambient temperature, in aprotic organic solvents such as toluene, xylene, dimethylsulfoxide (DMSO), tetrahydrofuran (THF), dimethoxyethane (DME), ethyl ether, diethylene glycol dimethylether and their mixtures. Among these THF is preferred.

The preferred reaction temperatures are ranging from -78°C to +30°C, preferably at ambient temperature (20 - 25 °C) or at values close to ambient temperature for a period of 3 to 48 hours, usually a reaction time of 24 hours is sufficient to complete the reaction.

The preparations of compounds of formula (II) and (I) described above can be carried out singularly or in sequence to give the products (I) as a two-step process, starting from the reagents (IV) and cyclic carbonates, and subsequent reaction of the compounds (II) thus obtained with compounds (III), as described above.

It is important to underline that complexes of rhodium and cobalt are successfully employed as catalysts in large scale olefin hydroformylation and hydrogenation processes, see for example B. Cornils, W. A. Herrmann (Eds.), *Applied Homogeneous Catalysis with Organometallic Compounds,* VCH, Weinheim, 1996, Vol. I; *Comprehensive Organometallic Chemistry;* Wilkinson, G., Stone, F. G. A., Abel, E. W., Eds.; Pergamon New York, 1995, Vol. 12.

Compounds having formula (I) MZL can be used as catalysts, in particular complexes of rhodium, cobalt, iridium, ruthenium and platinum.

The examples that follow are always performed under an inert atmosphere of nitrogen or argon and provide a better illustration of the present invention.

EXAMPLE 1

*"Procedure for the preparation of $NaC_5H_4CO_2C_2H_4OH$*

*(Formula II: M'=Na, m=1, R= $-CH_2-CH_2-$, n=1)"*

To a solution of NaCp (6.93 g, 78.8 mmol) in THF (50 mL), solid ethylene carbonate (1,3-diossolan-2-one) (6.93 g, 78.8 mmol) is added and the reaction mixture is stirred at ambient temperature for 24 hours. The reaction mixture is filtered and the solvent removed under vacuum. The solid residue is the 2-hydroxethoxycarbonylcyclopentadienyl sodium.

EXAMPLE 2

*"Procedure for the preparation of $NaC_5H_4CO_2(CHR)_2OH$ (R = H, Me)*

*(Formula II: M'=Na, m=1, R= $-CH(CH_3)-CH_2-$ or $-CH_2-CH(CH_3)-$, n=1)"*

To a solution containing NaCp (2.14 g, 24.3 mmol) in THF (30 mL) (+/-)-1,2-propilencarbonato (4-metil-1,3 diossolan-2-one) (2.15 mL, d = 1.189 g/mL, 25 mmoli) is dropped at ambient temperature. After having stirred the reaction mixture for 24 hours at ambient temperature the solvent is completely removed under vacuum and the resulting solid is washed with diethyl ether to give the title compounds.

EXAMPLE 3

*"Procedure for the preparation of $[Fe(C_5H_4CO_2C_2H_4OH)_2]$*

*(Formula I: M=Fe, Z two groups (z), R= $-CH_2-CH_2-$, n=1, L= absent)"*

To a solution of $NaC_5H_4CO_2C_2H_4OH$ (0.55 g, 3.1 mmol) in THF (20 mL), solid, anhydrous $FeCl_2$ (0.140 g, 1.10 mmol) is added. The suspension is stirred at ambient temperature for 12 hours and then filtered on a celite pad. After filtration, the solution obtained is evaporated the final product as a red viscous oil having formula $[Fe(C_5H_4CO_2C_2H_4OH)_2]$.

**EXAMPLE 4**

*"Procedure for the preparation of $[Rh(CO)_2C_5H_4CO_2C_2H_4OH]$"*

*(Formula I: M=Rh, Z = one group (z), R= $-CH_2-CH_2-$, n=1, L= 2 CO)"*

To a solution of $NaC_5H_4CO_2C_2H_4OH$ (0.134 g, 0.760 mmol) in THF (30 mL), solid $[Rh(CO)_2Cl]_2$ (0.110 g, 0.282 mmol) is added. The solution is stirred for 3 hours at room temperature. The suspension is evaporated to dryness and to the solid residue $CH_2Cl_2$ was added. The suspension was filtered on a celite pad and the final product $[Rh(CO)_2CpCO_2C_2H_4OH]$ is obtained after column chromatography on silica gel eluting with $Et_2O$.

EXAMPLE 5

*"Procedure for the preparation of $[Mn(CO)_3C_5H_4CO_2C_2H_4OH]$*

*(Formula I: M=Mn, Z = one group (z), R= $-CH_2-CH_2-$, n=1, L= 3CO)"*

To a solution of $NaC_5H_4CO_2CH_2CH_2OH$ (0.268 g, 1.37 mmol) in THF (30 mL), solid $MnBr(CO)_5$ (0.125 g, 0.45 mmol) was added. After having stirred for 3 h at ambient temperature the suspension is filtered on a celite pad and the final product $[Mn(CO)_3CpCO_2C_2H_4OH]$ is obtained after column chromatography on silica gel eluting with THF/Etp as a 2:1 mixture.

With the some procedure the rhenium complex $[Re(CO)_3C_5H_4CO_2C_2H_4OH]$ can be obtained.
(Formula I: M = Re, Z = one group (z), R= $-CH_2-CH_2-$, n=1, L= 3CO)

**Claims**

1. Procedure for the preparation of metallic complexes (I):

$$MZL \qquad (I)$$

wherein

- M is selected from Rh, Mn, Re, Co, Ir, Ru and Pt, in this case there is only one ligand Z or Me is Fe, in this case there are two ligands Z and L is absent;
- Z is a substituted cyclopentadienyl ligand of the formule (z):

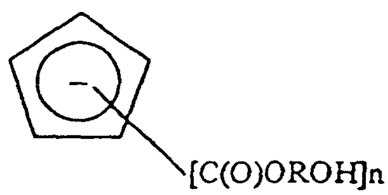

(z)

in which n = 1, 2, 3, 4 or 5 and R represents a ($C_2$-$C_8$) linear or branched hydrocarbyl radical;
- L represents one or more ligands chosen among oxides, halides, alcholates, ester, ethers, thioether, amines, alkyls, alkenes (linear or cyclic), aryls and phosphines, L can be absent and

this procedure comprises reacting a compound of formula (II)

$$M'(z)_m \qquad (II)$$

wherein

- M' is Na, K, Li or Tl, (z) is defined as described above and m is 1; or
- M' is Mg, (z) is defined as described above and m is 2;

with a compound of formula (III)

$$MXL \qquad (III)$$

where X is at least one halide, M and L are defined as described earlier, and isolate the compound of formula (I) thus obtained.

2. Procedure according to claim 1, in which M is chosen among Fe, Rh, Mn and Re.

3. Procedure according to claim 1, in which Z is only one group (z) and M is chosen among Rh, Mn and Re.

4. Procedure according to claim 1, in which Z are two groups (z), M is Fe and L is absent.

5. Procedure according to Claim 1, in which n is 1.

6. Procedure according to Claim 1, in which M' is sodium.

7. Procedure according to Claim 1, in which L represents one or more carbon oxide.

**8.** Procedure according to Claim 1, in which the compound of formula (III) is chosen among $FeCl_2$, $[Rh(CO)_2Cl_2]$, $MnBr(CO)_5$ and $ReBr(CO)_5$.

**9.** Compounds of formula (I)

$$MZL \qquad (I)$$

wherein

- M is at least a metal chosen among Rh, Mn and Re;
- Z is a group of formula (z):

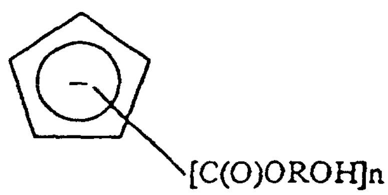

(z)

where n = 1, 2, 3, 4 o 5 e R represents a ($C_2$-$C_8$) linear or branched hydrocarbyl radical;
L is one or more ligands chosen among oxides, halides, alcholates, ester, ethers, thioether, amines, alkyls, alkenes (linear or cyclic), aryls and phosphines.

**10.** Compounds according to claim 9, in which n is 1.

**11.** Compounds according any claim from 9 to 10, in which L represent one or more carbon oxide.

**12.** Compounds of formula (II), defined as described in claim 1.

**13.** Compound according to claim 11, in which M' is sodium.

**14.** Procedure for the preparation of compound of formula (II) defined as described in claim 1, consisting in reacting a compound of formula (IV)

$$M'(Cp)_m \qquad (IV)$$

where Cp is the cyclopentadienyl ($C_5H_5$) moiety and

- M' is Na, K, Li or Tl, and m is 1; or
- M' is Mg, and m is 2;

with a cyclic carbonate $R(O)_2C{=}O$; where R represent a ($C_2$-$C_8$) linear or branched hydrocarbyl radical.

**15.** Use of compounds of formula (I) according to claim 9 as intermediate in polymers preparation.

**16.** Use of compounds of formula (I) in which M is chosen among rhodium, cobalt, iridium, ruthenium and platinum, Z, L and x are defined according to claim 1, as catalysts.

**17.** Use of compounds of formula (I) according to claim 9 as catalysts.

## Patentansprüche

1. Verfahren zur Herstellung von metallischen Komplexverbindungen (I)

$$MZL \qquad (I)$$

- wobei M aus folgenden Elementen ausgewählt wird: Rh, Mn, Re, Co, Ir, Ru und Pt, in diesem Fall gibt es nur einen Liganden: Z, oder Me ist Fe, in diesem Fall gibt es zwei Liganden Z und L ist nicht vorhanden.
- Z ist ein substituierter Cyclopentadienyl-Ligand der Formel (Z):

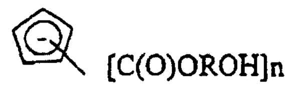

(z)

wobei n = 1, 2, 3, 4 oder 5, und R bedeutet einen ($C_2$-$C_8$) linearen oder verzweigten Hydrocarbyl-Rest;
- L bedeutet einen oder mehrere Liganden, welche aus Oxyden, Halogeniden, Alcholaten, Estern, Ethern, Thioethern, Aminen, Alkylen, Alkenen (linearen oder zyklischen) Arylen und Phosphinen ausgewählt werden, L kann fehlen und dieser Vorgang besteht aus der Umsetzung einer Verbindung der Formel (II)

$$M'(z)_m \qquad (II)$$

in welcher

- M' ist Na, K, Li oder Tl, (z) ist wie oben beschrieben definiert und m ist 1; oder
- M' ist Mg, (z) ist wie oben beschrieben definiert und m ist 2;

mit einer Verbindung der Formel (III)

$$MXL \qquad (III)$$

wobei X zumindest ein Halogenid ist, M und L wie zuvor beschrieben definiert sind, und die so erhaltene Verbindung der Formel (I) isolieren.

2. Verfahren nach Anspruch 1, wobei M unter Fe, Rh, Mn und Re ausgewählt wird.

3. Verfahren nach Anspruch 1, wobei Z nur eine Gruppe (z) ist und M unter Rh, Mn und Re ausgewählt wird.

4. Verfahren nach Anspruch 1, wobei Z zwei Gruppen (z) darstellt, M ist Fe und L ist nicht vorhanden.

5. Verfahren nach Anspruch 1, wobei n 1 bedeutet.

6. Verfahren nach Anspruch 1, wobei M' Natrium bedeutet.

7. Verfahren nach Anspruch 1, wobei L ein oder mehrere Kohlenstoffoxide bedeutet.

8. Verfahren nach Anspruch 1, wobei die Verbindung der Formel (III) aus folgenden ausgewählt wird: $FeCl_2$, $[Rh(CO)_2Cl_2]$, $MnBr(CO)_5$ und $ReBr(CO)_5$.

9. Verbindungen der Formel (I)

$$MZL \qquad (I)$$

wobei

- M zumindest eines der folgenden Metalle ist: Rh, Mn und Re;
- Z eine Formelgruppe (z) ist:

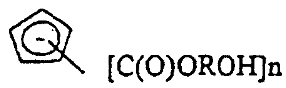

(z)

- wobei n = 1, 2, 3, 4 oder 5, und R bedeutet einen ($C_2$-$C_3$) linearen oder verzweigten Hydrocarbyl-Rest;

L bedeutet einen oder mehrere Liganden, welche aus Oxyden, Halogeniden, Alcholaten, Estern, Ethern, Thioethern, Aminen, Alkylen, Alkenen (linearen oder zyklischen) Arylen und Phosphinen ausgewählt werden.

**10.** Verbindungen nach Anspruch 9, wobei n 1 bedeutet.

**11.** Verbindungen nach einem der Ansprüche von 9 bis 10, wobei L einen oder mehrere Kohlenstoffoxide bedeutet.

**12.** Verbindungen der Formel (II), definiert wie in Anspruch 1 beschrieben.

**13.** Verbindung nach Anspruch 11, wobei M' Natrium bedeutet.

**14.** Verfahren zur Herstellung der Verbindung der Formel (II) nach Anspruch 1, bestehend aus der Umsetzung einer Verbindung der Formel (IV)

$$M'(Cp)_m \qquad (IV)$$

wobei Cp die Cyclopentadienyl-Einheit ($C_5H_5$) ist und

- M' ist Na, K, Li oder Tl, und m ist 1; oder
- M' ist Mg, und m ist 2;

mit einem zyklischen Karbonat R(O)2C=O; in welchem R einen ($C_2$-$C_3$) linearen oder verzweigtem Hydrocarbyl-Rest bedeutet.

**15.** Verwendung von Verbindungen der Formel (I) nach Anspruch 9 als Zwischenstufe bei der Polymerhestellung.

**16.** Verwendung von Verbindungen der Formel (I), wobei M unter Rhodium, Cobalt, Iridium, Ruthenium und Platinum ausgewählt wird, Z, L und x sind nach Anspruch 1, als Katalysatoren definiert.

**17.** Verwendung von Verbindungen der Formel (I) nach Anspruch 9 als Katalysatoren.

## Revendications

**1.** Procédé pour la préparation des complexes métalliques (I):

$$MZL \quad (I)$$

où

- M est choisi parmi Rh, Mn, Re, Co, Ir, Ru et Pt, dans ce cas-ci il y a seulement un ligand Z ou Me est Fe, dans ce cas-ci il y a deux ligands Z et L est absent;
- Z est un ligand substitué de cyclopentadienyl de la formule (z)

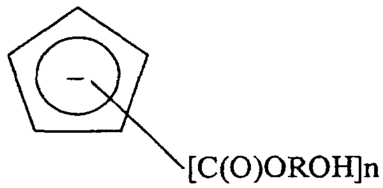

(z)

dans quel n = 1, 2, 3, 4 ou 5 et R représente le radical linéaire ou embranché ($C_2$-$C_8$) hydrocarbyl ;
- L représente un ou plusieurs ligands choisis parmi les oxydes, halogénures, alcholates, ester, éthers, thioether, amines, alkyls, alcènes (linéaires ou cycliques), aryles et phosphines, L peut être absent et

ce procédé comprend de faire réagir un composé de formule (II)

$$M'(z)_m \quad (II)$$

où

- M' est Na, K, Li ou Tl, (z) est défini comme décrit ci-dessus et m est 1; ou
- M' est Mg, (z) est défini comme décrit ci-dessus et m est 2;

avec un composé de formule (III)

$$MXL \quad (III)$$

où X est au moins un halogénure, M et L sont définis comme décrit ci-dessus et isolent le composé formule (i) ainsi obtenu.

**2.** Procédé selon la revendication 1, dans laquelle M est choisi parmi Fe, Rh, Mn et Re.

**3.** Procédé selon la revendication 1, dans laquelle Z est seulement un groupe (z) et M est choisi parmi le Rh, Mn et Re.

**4.** Procédé selon la revendication 1, dans laquelle Z sont deux groupes de (z), M est Fe et le L est absent.

**5.** Procédé selon la revendication 1, dans laquelle n est 1.

**6.** Procédé selon la revendication 1, dans laquelle M' est sodium.

**7.** Procédé selon la revendication 1, dans laquelle L représente un ou plusieurs carbon oxide.

**8.** Procédé selon la revendication 1, dans laquelle le composé de la formule (III) est choisi parmi $FeCl_2$, $[Rh(CO)_2Cl_2]$, $MnBr(CO)_5$ et $ReBr(CO)_5$.

**9.** Composés de la formule (I)

MZLx (I)

où:

- M est au moins un métal choisi parmi Rh, Mn et Re;
- Z est un groupe de formule (z):

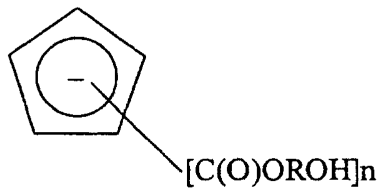

(z)

où n = 1, 2, 3, 4 o 5 e R représente le radical linéaire ou embranché ($C_2$-$C_8$) hydrocarbyl;
L est un ou plusieurs ligands choisis parmi les oxydes, halogénures, alcholates, ester, éthers, thioether, amines, alkyls, alcènes (linéaires ou cycliques), aryles et phosphines.

**10.** Composés selon la revendication 9, dans laquelle n est 1.

**11.** Compose accorder n'importe quelle réclamation de 9 à 10, dans lesquels L représente un ou plusieurs carbon oxyde.

**12.** Composés de la formule (II), définis comme décrit dans la revendication 1.

**13.** Composé selon la revendication 11, dans laquelle M' est sodium.

**14.** Procédé pour la préparation du composé de la formule (II) défini comme décrit dans la revendication 1, consistant en réagissant un composé de la formule (IV)

$$M'(Cp)_m \qquad (IV)$$

où CP est le radical du cyclopentadienyl ($C_5H_5$) et

- M' est Na, K, Li ou Tl, et m est 1; ou
- M' est Mg, et m est 2;

avec du carbonate cyclique $R(O)_2C{=}O$, où R représente le radical linéaire ou embranché ($C_2$-$C_8$) de hydrocarbyl.

**15.** Utilisation des composés de la formule (I) selon la revendication 9 en tant qu'intermédiaire dans la préparation de polymères.

**16.** Utilisation des composés de la formule (I) dans lesquels M est choisi parmi le rhodium, cobalt, iridium, ruthénium et le platine, Z, L et x sont définis selon la revendication 1, comme catalyseurs.

**17.** Utilisation des composés de la formule (I) selon la revendication 9 comme catalyseurs.